# EUROPÄISCHE PATENTSCHRIFT

(11) **EP 3 261 825 B1**
(45) Veröffentlichungstag und Bekanntmachung des Hinweises auf die Patenterteilung: **02.09.2020**
(21) Anmeldenummer: 15804720.9
(22) Anmeldetag: 30.11.2015
(51) Int. Cl.: B29C 70/52, B29C 70/54, B29D 99/00, B29C 63/02

(54) **PULTRUSIONSVERFAHREN ZUR HERSTELLUNG VON FASERVERSTÄRKTEN KUNSTSTOFFPROFILEN**
PULTRUSION METHOD FOR PRODUCING FIBRE-REINFORCED PLASTIC PROFILED SECTIONS
PROCÉDÉ D'EXTRUSION PAR ÉTIRAGE DE PROFILÉS EN PLASTIQUE RENFORCÉS PAR FIBRES

(30) Priorität: 24.02.2015 DE 102015203315
(43) Veröffentlichungstag der Anmeldung: 03.01.2018
(73) Patentinhaber: Bayerische Motoren Werke Aktiengesellschaft, 80809 München (DE)
(72) Erfinder: EISCH, Christoph, 80939 München (DE); SITTER, Sandra, 80939 München (DE)
(86) Internationale Anmeldenummer: PCT/EP2015/078030
(87) Internationale Veröffentlichungsnummer: WO 2016/134792

(56) Entgegenhaltungen:
- US-A- 3 233 870
- US-A- 5 727 672
- US-A1- 2003 196 391

## Beschreibung

Die Erfindung betrifft ein Pultrusionsverfahren zum Herstellen eines faserverstärkten Kunststoffprofils, sowie eine Pultrusionsvorrichtung zur Herstellung desselben.

Für die Herstellung von faserverstärkten Kunststoffprofilen ist beispielsweise aus der DE 10 2009 053 947 A1 ein Strangziehverfahren (auch als Pultrusionsverfahren bezeichnet) bekannt. In einem ersten Schritt werden auf Spulen vorgehaltene Verstärkungsfasern, beispielsweise aus Glas- oder Kohlenstofffasern, von den Spulen abgezogen und in einem Imprägnier-Werkzeug mit einer Matrix, beispielsweise einem Harz, imprägniert. In einem Vorformwerkzeug werden die imprägnierten Fasern vorausgerichtet, um diese in einem nachfolgenden Schritt mittels eines Strangziehwerkzeugs in die endgültige Profilform zu bringen und auszuhärten. Ein so hergestelltes Profil wird mithilfe einer Zugeinrichtung kontinuierlich durch die einzelnen Bearbeitungsstationen gezogen und anschließend einem Schneidwerkzeug zum Abtrennen von Segmenten definierter Länge zugeführt.

Allgemein sind weitere Ausgestaltungen von Strangziehverfahren bekannt, die unter anderem das zusätzliche Einbringen von flächigen Halbzeugen, wie beispielsweise von multidirektionalen Gelegen, umfassen, welche auf den vorausgerichteten Verstärkungsfasern zur Erzeugung eines Lagenaufbaus aufgebracht und in die gewünschte, endgültige Profilform drapiert werden können. Es kann hierbei der erzeugte Lagenaufbau aus Verstärkungsfasern und aufgebrachten Gelegen beispielsweise zu einem Hohlprofil mit geschlossenem Profilquerschnitt umgeformt werden, indem zumindest die einander entgegengesetzten seitlichen Ränder eines oder mehrerer Gelege miteinander verbunden werden. Hierzu werden die seitlichen Ränder miteinander überlappend angeordnet, um das Hohlprofil mit einem Hohlraum im Inneren des Profilquerschnitts zu definieren.

Hierbei ist der erzeugte Überlappungsbereich ausreichend groß zu wählen, dass ein flächiges Aufliegen der sich überlappenden Abschnitte ein Verrutschen der Fasern beziehungsweise des Geleges verhindert. Jedoch wird auf diese Weise eine Materialdopplung verursacht, die sowohl einen Materialbedarf erhöht, als auch entsprechende zusätzliche Materialkosten und ein hohes Gewicht des erzeugten Profils bedingt. Ist im Gegensatz dazu der Überlappungsbereich zu klein gewählt oder treten Unregelmäßigkeiten im Strangziehprozess auf, so kann es zu einem Aufscheren des Geleges kommen, wodurch das gesamte erzeugte Profil unbrauchbar wird.

Pultrusionsvorrichtungen und -Verfahren sind beispielsweise aus dem Stand der Technik US 2003/0196391 A1, US 3,233,870 A und US 5,727,672 A bekannt.

Aufgabe der Erfindung ist es daher eine Prozesssicherheit für ein Pultrusionsverfahren zu verbessern und gleichzeitig einen Materialbedarf des eingesetzten Fasermaterials zu reduzieren.

Diese Aufgabe wird gelöst mittels eines Verfahrens gemäß Patentanspruch 1 sowie einer Pultrusionsvorrichtung mit den Merkmalen gemäß Patentanspruch 9. Vorteilhafte Ausführungsformen ergeben sich aus den jeweils abhängigen Patentansprüchen.

Demnach wird ein Pultrusionsverfahren zum Herstellen eines faserverstärkten Kunststoffprofils mit mindestens den folgenden Schritten vorgeschlagen:
- Anordnen einer Anzahl von Faserrovings zu einem unidirektionalen Faservorprofil mit einem definierten ersten Querschnitt,
- Aufbringen mindestens eines Geleges auf das unidirektionale Faservorprofil zum Erzeugen eines Lagenaufbaus, vorzugsweise eines multidirektionalen Lagenaufbaus, wobei jedes Gelege seitliche Randabschnitte umfasst,
- überlappendes Anordnen zweier seitlicher Randabschnitte zum Erzeugen eines gemeinsamen Überlappungsabschnitts,
wobei das Verfahren außerdem einen Schritt des form- und/oder kraftschlüssigen Verbindens der beiden sich überlappenden seitlichen Randabschnitte in dem Überlappungsabschnitts mittels Nähen, Tuften und/oder Klammern umfasst.

Zunächst werden also mehrere Faserrovings zu dem unidirektionalen Faservorprofil angeordnet. Beispielsweise können hierzu auf Spulen vorgehaltene Faserrovings von den Spulen abgezogen und mittels eines Vorformwerkzeugs zu dem unidirektionalen Faservorprofil zusammengeführt werden, welches den definierten ersten Querschnitt erhält. Dieser Erste Querschnitt des Faservorprofils kann entweder bereits einem späteren Querschnitt des zu erzeugenden Kunststoffprofils entsprechen oder lediglich eine Vorfom darstellt, die im Laufe der nachfolgenden Verfahrensschritte in den späteren finalen Querschnitt des zu erzeugenden Kunststoffprofils überführt wird.

Als unidirektionales Faservorprofil ist eine parallele Anordnung der einzelnen Faserrovings zu verstehen, wobei ein jeweiliger Abstand der Faserrovings untereinander eventuellen Anforderungen angepasst werden kann. Die Faserrovings können entweder unmittelbar aneinandergrenzend, also ohne Abstand zu den jeweils benachbarten Faserrovings, oder beabstandet zueinander angeordnet sein. Eine Faserorientierung des Faservorprofils beziehungsweise der das Faservorprofil bildenden Faserrovings ist entsprechend in Zugrichtung der Pultrusionsrichtung ausgerichtet, im Folgenden auch als 0°-Richtung bezeichnet. Innerhalb einer gemeinsamen, senkrecht zur Pultrusionsrichtung angeordneten Ebene (die Pultrusionsrichtung steht also senkrecht zu dieser Ebene) bildet die Anordnung der zueinander benachbarten Faserrovings den definierten ersten Querschnitt des Faservorprofils. Als Faservorprofil ist daher statt eines festen Körpers vielmehr die beschriebene Anordnung beziehungsweise lose Führung der einzelnen Faserrovings zu verstehen, die zu diesem Zeitpunkt noch nicht zwingend miteinander verbunden oder gegeneinander fixiert sein müssen.

Anschließend werden ein oder mehrere Gelege zugeführt und auf dem zuvor erzeugten Faservorprofil angeordnet, so dass ein mehrschichtiger Lagenaufbau entsteht. Vorzugsweise stellen das oder die Gelege jeweils selbst einen mehrlagigen Aufbau dar, wobei die einzelnen Lagen eine voneinander abweichende Faserorientierung aufweisen können. Optional kann das Gelege mit einer von der Pultrusionsrichtung abweichenden Winkelausrichtung auf das Faservorprofil zur Erzeugung eines multidirektionalen Lagenaufbaus aufgebracht werden, wodurch sich eine Stabilität und Steifigkeit des späteren Kunststoffprofils vorteilhaft beeinflussen lässt.

Während des Aufbringens des mindestens einen Geleges, und/oder in einem nachfolgenden Schritt, werden zwei seitliche Randabschnitte des einen oder der mehreren Gelege überlappend angeordnet und miteinander form- und/oder kraftschlüssig verbunden, um eine verschiebungssichere Fixierung zu erzielen. Es kann damit verhindert werden, dass aufgrund einer Zugkraft bei der Durchführung des Pultrusionsverfahrens eine Verschiebung der beiden Randabschnitte zueinander erfolgt. Die Gefahr einer hierdurch bewirkten Schwächung des erzeugten Kunststoffprofils kann somit wirkungsvoll verhindert werden. Als seitliche Randabschnitte sind die Randbereiche der Gelege zu verstehen, die bezogen auf die Pultrusionsrichtung den seitlichen Abschluss des jeweiligen Geleges bilden.

Zum Beispiel umfasst der definierte erste Querschnitt des unidirektionalen Faservorprofils einen rechteckigen ersten Querschnitt zur Definition eines als ebene Faserlage ausgebildeten Faservorprofils, oder einen in Umfangsrichtung geschlossenen oder geöffneten ersten Querschnitt zur Definition eines als offenes oder geschlossenes Hohlprofil ausgebildeten Faservorprofils.

Die unidirektional parallel zueinander angeordneten Faserrovings können also ein- oder mehrschichtig zu einer ebenen Faserlage angeordnet werden, die einen rechteckigen Querschnitt aufweist. Die Faserrovings können aber auch zu einem Faservorprofil angeordnet werden, welches ein Hohlprofil darstellt und einen inneren Hohlraum umschließt. Der Querschnitt des Hohlprofils kann in seiner Umfangsrichtung geschlossen oder geöffnet ausgeführt sein. Derartige Querschnitte lassen sich zum Beispiel mittels eines Kernprofils erzeugen oder durch Drapieren, wie nachfolgend noch näher ausgeführt wird.

Gemäß einer Ausführungsform kann das Verfahren ein zueinander benachbartes Aufbringen von zwei Gelegen auf einer Oberfläche des Faservorprofils umfassen, wobei die Gelege mit einem dem jeweils benachbarten Gelege zugewandten Randabschnitt überlappend zueinander angeordnet werden, zum Erzeugen des Lagenaufbaus und des Überlappungsabschnitts.

Mit anderen Worten dargestellt: Auf einer Oberfläche des von den Faserrovings gebildeten Faservorprofils werden zwei Gelege (bezogen auf die Pultrusionsrichtung) beispielsweise seitlich nebeneinander aufgebracht. Diese weisen jeweils einen (ebenfalls bezogen auf die Pultrusionsrichtung) seitlichen Randabschnitt auf. Beide seitlichen Randabschnitte werden derart überlappend miteinander angeordnet, dass diese den gemeinsamen Überlappungsabschnitt bilden, um in diesem miteinander verbunden zu werden. Die beiden Gelege können entweder auf einer äußeren Oberfläche des Faservorprofils und/oder auf einer inneren Oberfläche (sofern vorhanden) aufgebracht werden.

Alternativ kann das Verfahren ein Aufbringen von mindestens zwei Gelegen umfassen, welche auf einander entgegengesetzten Oberflächen des Faservorprofils zum Erzeugen der Lagenanordnung aufgebracht werden. Im Gegensatz zu einem lediglich einseitigen und damit asymmetrischen Aufbringen eines oder mehrerer Gelege, wird mittels des beidseitigen Aufbringens von Gelegen ein symmetrischer Lagenaufbau erzeugt, der eine vorteilhafte Stützwirkung für das Faservorprofil bereitstellt.

Unabhängig vom Aufbau des gewählten Lagenaufbaus kann das Verfahren einen Schritt des Drapierens des Faservorprofils und/oder des Lagenaufbaus vor oder während dem Schritt des Erzeugens des Überlappungsabschnitts umfassen. Soll also im Rahmen des Pultrusionsverfahrens zum Beispiel aus dem Lagenaufbau mit ebenem oder offenem ersten Querschnitt ein Hohlprofil mit einem geschlossenen zweiten Querschnitt hergestellt werden, so wird durch das Drapieren eine Umformung in den gewünschten Profilquerschnitt erzeugt. Gleiches gilt für eine Umformung in einen ebenfals offenen Querschnitt.

Je nach Ausgestaltung des Drapierschrittes, kann während des gesamten Pultrusionsprozesses zunächst ein Vordrapieren des Faservorprofils (mit dem definierten ersten Querschnitt) oder des Lagenaufbaus erfolgen und ein vorläufiger zweiter Profilquerschnitt erzeugt werden, wobei die seitlichen Randabschnitte des oder der Gelege(s) erst nachfolgend im Rahmen einer Endkonturformung tatsächlich miteinander überlappend in Kontakt gebracht und/oder verbunden werden. Alternativ können die seitlichen Randabschnitte des oder der Gelege(s) aber auch bereits während des Drapierschrittes miteinander in Kontakt gebracht und verbunden werden. Auf diese Weise lassen sich in einer Umfangsrichtung beliebige offene oder geschlossene Querschnitte erzeugen, zum Beispiel regelmäßige, unregelmäßige, symmetrische oder asymmetrische, insbesondere runde, ovale oder mehreckige Querschnitte, oder Mischungen hieraus.

Der Schritt des form- und/oder kraftschlüssigen Verbindens der Randabschnitte in dem Überlappungsabschnitt umfasst - wie beschrieben - ein Nähen, Tuften und/oder Klammern. Die beschriebenen Verbindungsmethoden erlauben eine zuverlässige und verschiebungssichere Verbindung der beiden Randabschnitte miteinander, die zudem nur geringe Auswirkungen auf das spätere Profil hat. Eine unbeabsichtigte Verschiebung der Randabschnitte und eine damit einhergehende Schwächung oder Zerstörung des erzeugten Profilstrangs wird damit wirkungsvoll verhindert.

Gemäß einer weiteren Ausführungsform kann das Verfahren außerdem mindestens einen Schritt des Imprägnierens der Faserrovings, des Faservorprofils, des mindestens einen Geleges und/oder des Lagenaufbaus mit einer Matrix umfassen.

Vorzugsweise erfolgt der Schritt des Imprägnierens nach dem Schritt des Drapierens. Dies bedeutet, dass der Lagenaufbau, also Faserrovings und Gelege, zunächst im trockenen, nicht-imprägnierten Zustand verarbeitet und drapiert werden. Erst nachdem die beiden Randabschnitte miteinander verbunden wurden, erfolgt in diesem Fall der Schritt des Imprägnierens. Alternativ oder zusätzlich können bereits die Faserrovings als Einzelrovings oder in Form des Faservorprofils einem (zusätzlichen) Imprägnierungsschritt unterzogen werden. Ebenso ist es möglich, alternativ oder zusätzlich, das Gelege separat oder zusammen mit dem Faservorprofil (entspricht dem Lagenaufbau) mit der Matrix zu imprägnieren. In diesen Fällen werden die nachfolgenden Bearbeitungsschritte im nassen, imprägnierten Zustand durchgeführt.

Beispielsweise kann der Schritt des Imprägnierens mit einer Matrix ein Eintauchen in ein Matrix-Tauchbad oder ein Injizieren einer Matrix umfassen.

Vorzugsweise umfasst das mindestens eine Gelege jeweils eine Anzahl von Schichten mit zueinander unterschiedlicher Winkelausrichtung. Es lassen sich somit die Festigkeit und Steifigkeit des späteren Profilbauteils erheblich verbessern.

Des Weiteren kann das beschriebene Pultrusionsverfahren einen Schritt des Härtens umfassen. Dieser schließt sich den beschriebenen Schritten an und erfolgt vorgelagert zu einem möglichen Schritt des Schneidens mit einem Schneidwerkzeug.

Des Weiteren wird eine Pultrusionsvorrichtung zum Herstellen eines faserverstärkten Kunststoffprofils bereitgestellt, wobei die Verbindungsvorrichtung zum Ausführen des beschriebenen Verfahrens ausgebildet ist. Insbesondere umfasst die Pultrusionsvorrichtung eine Vorrichtung zum Verbinden der beiden sich überlappenden seitlichen Randabschnitte in dem Überlappungsabschnitts.

Die Verbindungsvorrichtung umfasst Mittel zum form- und/oder kraftschlüssigen Verbinden der Randabschnitte in dem Überlappungsabschnitt, mittels Nähen, Tuften und/oder Klammern.

Diese Verbindungsvorrichtung kann beispielsweise zwischen einem Drapierabschnitt und einem Imprägnierabschnitt oder einem Härtungsabschnitt angeordnet sein. Gemäß einer anderen Ausführungsform ist die Verbindungsvorrichtung vor einem Drapierabschnitt angeordnet.

Das beschriebe Verfahren und die beschriebene Pultrusionsvorrichtung ermöglichen somit die Herstellung von faserverstärkten Kunststoffprofilen mittels Pultrusion, die insbesondere als Hohlprofile ausgeführt sein können, indem ein Bereich vorgesehen wird, in welchem sich das eine oder die mehreren Gelege überlappen und dort miteinander verbunden werden. Die Überlappung kann auf diese Weise minimal ausgeführt werden, indem sie gerade ausreichend für die Erzeugung der Verbindung ist. Auf große Überlappungen und entsprechend unnötigen Materialeinsatz kann somit verzichtet werden. Auch lassen sich entsprechend hohe Kosten und ein hohes Gewicht sowie die Entstehung von Ausschussbauteilen aufgrund aufgescherter Überlappungen vermieden.

Die Erfindung wird nachfolgend anhand eines Ausführungsbeispiels unter Bezugnahme auf die Figuren näher erläutert. Es zeigen:
- Fig. 1: eine Pultrusionsvorrichtung gemäß der Beschreibung, und
- Fig. 2: zwei Hohlprofilquerschnitte eines faserverstärkten Kunststoffprofils, und
- Fig. 3: zwei weitere Querschnitte eines faserverstärkten Kunststoffprofils.

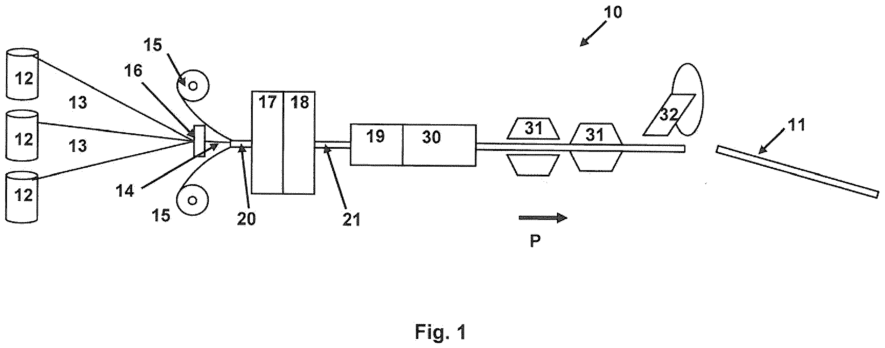

Fig. 1 zeigt eine Pultrusionsvorrichtung 10 zum Herstellen eines faserverstärkten Kunststoffprofils 11. Die Pultrusionsvorrichtung 10 umfasst eine Anzahl von Spulen 12 mit Faserrovings 13, die von den Spulen 12 in Pultrusionsrichtung P abgezogen und beispielsweise mittels einer Vorformvorrichtung 16 zu dem unidirektionalen Faservorprofil 14 zusammengeführt werden. Auf das bereitgestellte unidirektionale Faservorprofil 14 aus der Anzahl von Faserrovings erfolgt ein Aufbringen von Gelegen 15 zum Erzeugen eines Lagenaufbaus 20. Hierzu können die Gelege 15 beispielsweise ebenfalls als Spulen bereitgestellt werden.

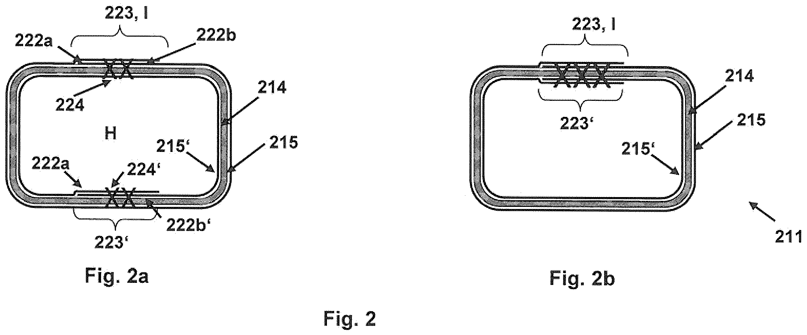

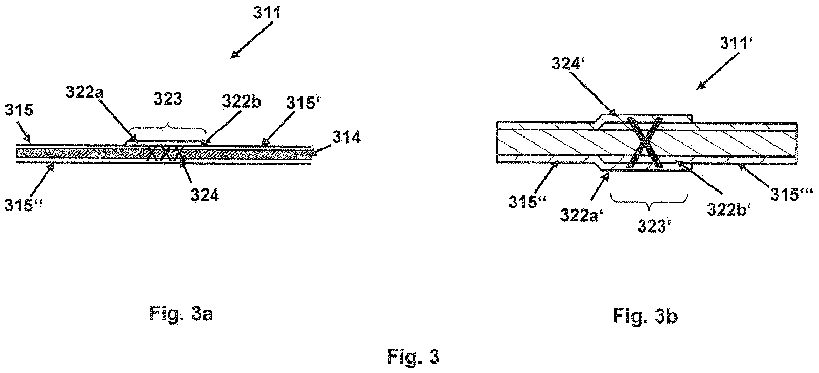

In der dargestellten Ausführungsform erfolgt ein Aufbringen der Gelege 15 auf einander entgegengesetzten Seiten des in der Vorformvorrichtung 16 erzeugten Faservorprofils 14, also beispielsweise einer äußeren und einer inneren Oberfläche und/oder einer Ober- und einer Unterseite des Faservorprofils 14, wodurch der Lagenaufbau 20 erzeugt wird. Der Lagenaufbau 20 wird einer Drapiervorrichtung 17 zugeführt, in der durch ein kontinuierliches Drapieren eines ersten Querschnitts des Lagenaufbaus 20 ein kontinuierliches Hohlprofil 21 mit einem zweiten Querschnitt, beispielsweise einem dreidimensionalen Hohlprofilquerschnitt, erzeugt wird. Während des Drapierens erfolgt ein Umformen des Lagenaufbaus, bei dem jeweils zwei seitliche Randabschnitte eines oder zweier Gelege 15 überlappend angeordnet werden, um jeweils einen gemeinsamen Überlappungsabschnitt zu bilden. Beispielhafte Querschnitte für ein Kunststoffprofil sind in Fig. 2 und 3 dargestellt. Anschließend wird das erzeugte kontinuierliche Hohlprofil 21 einer Verbindungsvorrichtung 18 zugeführt, in der ein form- und/oder kraftschlüssiges Verbinden der beiden sich überlappenden seitlichen Randabschnitte in dem Überlappungsabschnitt erfolgt. Der Schritt des form- und/oder kraftschlüssigen Verbindens der Randabschnitte in dem Überlappungsabschnitt umfasst ein Nähen, Tuften oder Klammern und auf diese Weise eine haltbare und verschiebungssichere Verbindung sicherstellen.

Bis zu diesem Zeitpunkt ist das drapierte Hohlprofil 21 in dieser Ausführungsform noch in trockenem, also nicht-imprägniertem Zustand. Erst anschließend wird das kontinuierliche Hohlprofil 21 einer nachfolgenden Imprägniervorrichtung 19 zugeführt, in welcher eine Matrix in den zum Hohlprofil 21 drapierten Lagenaufbau 20 injiziert wird. In einer darauffolgenden Aushärtevorrichtung 30 wird die injizierte Matrix (aus-) gehärtet.

Die Pultrusionsvorrichtung 10 verfügt des Weiteren über eine Abziehvorrichtung 31 zum Bereitstellen der Zugkraft für die Pultrusion des Kunststoffprofils und eine Schneidvorrichtung 32 zum Abtrennen von Kunststoffprofilen 11 mit einer definierten Länge. Abziehvorrichtungen 31 und Schneidvorrichtungen 32 sind allgemein bekannt, so dass auf deren Aufbau und Funktionsweise nicht eingegangen wird.

In den folgenden Fig. 2 und 3 sind identische oder entsprechende Komponenten mit entsprechenden Bezugszeichen benannt (letzte beiden Ziffern), welchen die jeweilige Figurennummer (erste Ziffer) vorangestellt ist.

Fig. 2 zeigt in den Fig. 2a und 2b zwei Querschnitte zweier mittels des beschriebenen Verfahrens hergestellter Kunststoffprofile 211, 211'. Die Pultrusionsrichtung P erstreckt sich demnach senkrecht zur Bildebene. Der in Fig. 2a dargestellte Lagenaufbau 220 umfasst jeweils das sich aus einer Anzahl von Faserrovings zusammensetzende Faservorprofil 214. Das Faservorprofil 214 ist zur Bildung eines Hohlraums H im Wesentlichen rechteckig abgewinkelt. Selbstverständlich ist die dargestellte Querschnittsform lediglich beispielhaft zu verstehen. Ebenso sind andere in einer Umfangsrichtung geöffnete oder geschlossene Querschnitte, ob regelmäßige, unregelmäßige, symmetrische oder asymmetrische, insbesondere runde, ovale oder mehreckige Querschnittsformen, oder Mischungen hieraus auf gleiche Weise herstellbar.

Das Faservorprofil 214 umfasst eine äußere Oberfläche, auf der ein Gelege 215 aufgebracht ist, welches einen (bezogen auf die Pultrusionsrichtung) linken und einen rechten seitlichen Randabschnitt 222a,222b, umfasst. Die beiden seitlichen Randabschnitte 222a,222b sind überlappend zueinander angeordnet und bilden den bereits genannten Überlappungsabschnitt 223. Um dessen Länge l (quer zur Pultrusionsrichtung P gerichtet) möglichst klein zu halten und dennoch eine zuverlässige Verbindung der beiden Randabschnitte 222a,222b miteinander zu gewährleisten, sind die überlappenden Randabschnitte 222a,222b in diesem Bereich mittels einer form- und/oder kraftschlüssigen Verbindung 224 (lediglich schematisch angedeutet) miteinander verbunden. Die Verbindung 224 wird mittels Nähen, Tuften oder Klammern erzeugt.

Lediglich optional ist auf einer der äußeren Oberfläche entgegengesetzt angeordneten, inneren Oberfläche des Faservorprofils 214 ein zweites Gelege 215' angeordnet, dessen beiden seitlichen Randabschnitte 222a',222b' ebenfalls einen Überlappungsbereich 223' bilden und in diesem miteinander verbunden 224' sind. Der Überlappungsbereich 223' ist in der dargestellten Ausführungsform lediglich beispielhaft (bezogen auf den von dem Faservorprofil 214 umschlossenen Hohlraum H) gegenüberliegend zu dem Überlappungsabschnitt 223 des ersten Geleges 215 angeordnet.

Fig. 2b zeigt einen im Wesentlichen identischen Querschnitt eines Kunststoffprofils gegenüber Fig. 2a, so dass auf dessen Beschreibung verwiesen wird. Im Unterschied zu Fig. 2a sind jedoch die Überlappungsbereiche 223,223' des ersten 215 und des zweiten Geleges 215' an derselben Position des Faservorprofils 214 angeordnet.

Fig. 3 zeigt zwei weitere Querschnitte eines faserverstärkten Kunststoffprofils 311, 311'. Das in Fig. 3a dargestellte Kunststoffprofil 311 weist einen im Wesentlichen ebenen Querschnitt auf und umfasst ein als ebene Faserlage ausgeführtes Faservorprofil 314. Auf einer ersten (oberen) Oberfläche sind zueinander benachbart zwei Gelege 315,315' vorgesehen, die mit einem dem jeweils benachbarten Gelege 315,315' zugewandten Randabschnitt 322a,322b überlappend zueinander angeordnet sind und somit einen Überlappungsabschnitt 323 definieren, in welchem eine form- und/oder kraftschlüssige Verbindung 324 lediglich schematisch angedeutet ist. Auf einer entgegengesetzten zweiten (unteren) Oberfläche des Faservorprofils 314 ist ein weiteres Gelege 315" angeordnet, um einen nahezu symmetrischen Lagenaufbau bereitzustellen und somit das Faservorprofil 314 beziehungsweise das hieraus erzeugte Kunststoffprofil 311 zu verstärken.

Fig. 3b zeigt einen im Wesentlichen gegenüber Fig. 3a identischen Querschnitt eines Kunststoffprofils 311', so dass auf dessen Beschreibung verwiesen wird. Im Unterschied zu Fig. 3a sind auf der unteren Oberfläche des Faservorprofils ebenfalls zwei zueinander benachbarte Gelege 315",315''' vorgesehen, die mit einem dem jeweils benachbarten Gelege 315",315''' zugewandten Randabschnitt 322a',322b' überlappend zueinander angeordnet sind und somit einen Überlappungsabschnitt 323' definieren, in welchem eine form- und/oder kraftschlüssige Verbindung 324' lediglich schematisch angedeutet ist.

## Patentansprüche

1. Pultrusionsverfahren zum Herstellen eines faserverstärkten Kunststoffprofils mit mindestens den folgenden Schritten:
- Anordnen einer Anzahl von Faserrovings (13) zu einem unidirektionalen Faservorprofil (14,214,314) mit einem definierten ersten Querschnitt,
- Aufbringen mindestens eines Geleges (15,215,315) auf das unidirektionale Faservorprofil (14,214,314) zum Erzeugen eines Lagenaufbaus (20,220,320) vorzugsweise eines multidirektionalen Lagenaufbaus, wobei jedes Gelege (15,215,315) seitliche Randabschnitte (222a,222b,322a322b) umfasst,
- überlappendes Anordnen zweier seitlicher Randabschnitte (222a,222b,322a322b) zum Erzeugen eines gemeinsamen Überlappungsabschnitts (223,323),
**dadurch gekennzeichnet, dass** das Verfahren außerdem einen Schritt des form- und/oder kraftschlüssigen Verbindens der beiden sich überlappenden seitlichen Randabschnitte in dem Überlappungsabschnitts mittels Nähen, Tuften und/oder Klammern umfasst.

2. Pultrusionsverfahren nach Anspruch 1, wobei der definierte erste Querschnitt des unidirektionalen Faservorprofils (14,214,314) einen rechteckigen ersten Querschnitt zur Definition eines als ebene Faserlage ausgebildeten Faservorprofils, oder einen in Umfangsrichtung geschlossenen oder geöffneten ersten Querschnitt zur Definition eines als offenes oder geschlossenes Hohlprofil ausgebildeten Faservorprofils umfasst.

3. Pultrusionsverfahren nach Anspruch 1 oder 2, wobei das Verfahren ein zueinander benachbartes Aufbringen von zwei Gelegen (15,215,315) auf einer Oberfläche des Faservorprofils (14,214,314) umfasst, wobei die Gelege (15,215,315) mit einem dem jeweils benachbarten Gelege (15,215,315) zugewandten Randabschnitt (222a,222b,322a322b) überlappend zueinander angeordnet werden, zum Erzeugen des Lagenaufbaus (20,220,320) und des Überlappungsabschnitts (223,323).

4. Pultrusionsverfahren nach einem der Ansprüche 1 bis 3, wobei das Verfahren ein Aufbringen von mindestens zwei Gelegen (15,215,315) umfasst, welche auf einander entgegengesetzten Oberflächen des Faservorprofils (14,214,314) zum Erzeugen des Lagenaufbaus (20,220,320) aufgebracht werden.

5. Pultrusionsverfahren nach einem der Ansprüche 1 bis 4, wobei das Verfahren einen Schritt des Drapierens des Faservorprofils (14,214,314) und/oder des Lagenaufbaus (20,220,320) vor oder während dem Schritt des Erzeugens des Überlappungsabschnitts (223,323) umfasst.

6. Pultrusionsverfahren nach einem der Ansprüche 1 bis 5, wobei das Verfahren außerdem mindestens einen Schritt des Imprägnierens der Faserrovings (13), des Faservorprofils (14,214,314), des mindestens einen Geleges (15,215,315) und/oder des Lagenaufbaus (20,220,320) mit einer Matrix umfasst.

7. Pultrusionsverfahren nach Anspruch 6, wobei der Schritt des Imprägnierens mit einer Matrix ein Eintauchen in ein Matrix-Tauchbad oder ein Injizieren einer Matrix umfasst.

8. Pultrusionsverfahren nach einem der Ansprüche 1 bis 7, wobei das mindestens eine Gelege (15,215,315) jeweils eine Anzahl von Schichten mit zueinander unterschiedlicher Winkelausrichtung umfasst.

9. Pultrusionsvorrichtung zum Herstellen eines faserverstärkten Kunststoffprofils, wobei die Vorrichtung zum Ausführen eines Verfahrens nach einem der Ansprüche 1 bis 8 ausgebildet ist wobei die Pultrusionsvorrichtung (10) eine Verbindungsvorrichtung (18) zum Verbinden der beiden sich überlappenden seitlichen Randabschnitte (222a,222b,322a322b) in dem Überlappungsabschnitts (223,323) aufweist, **dadurch gekennzeichnet, dass** die Verbindungsvorrichtung (18) Mittel zum form- und/oder kraftschlüssigen Verbinden der Randabschnitte (222a,222b,322a322b) in dem Überlappungsabschnitt (223,323), mittels Nähen, Tuften und/oder Klammern umfasst.

## Claims

1. Pultrusion method for producing a fibre-reinforced plastic profile, comprising at least the following steps:
- arranging a number of fibre rovings (13) so as to form a unidirectional preliminary fibre profile (14, 214, 314) with a defined first cross section,
- applying at least one scrim (15, 215, 315) to the unidirectional preliminary fibre profile (14, 214, 314) to produce a layered structure (20, 220, 320), preferably a multidirectional layered structure, each scrim (15, 215, 315) comprising lateral edge portions (222a, 222b, 322a, 322b),
- arranging two lateral edge portions (222a, 222b, 322a, 322b) in an overlapping manner to produce a common overlapping portion (223, 323),
**characterized in that** the method additionally comprises a step of form- and/or force-fittingly connecting the two overlapping lateral edge portions in the overlapping portion by means of sewing, tufting and/or clamping.

2. Pultrusion method according to Claim 1, the defined first cross section of the unidirectional preliminary fibre profile (14, 214, 314) comprising a rectangular first cross section for the definition of a preliminary fibre profile formed as a planar fibre layer, or a first cross section that is closed or open in the circumferential direction for the definition of a preliminary fibre profile formed as an open or closed hollow profile.

3. Pultrusion method according to Claim 1 or 2, the method comprising applying two scrims (15, 215, 315) adjacent to one another on a surface of the preliminary fibre profile (14, 214, 314), the scrims (15, 215, 315) being arranged overlapping one another with an edge portion (222a, 222b, 322a, 322b) facing the respectively adjacent scrim (15, 215, 315), in order to produce the layered structure (20, 220, 320) and the overlapping portion (223, 323).

4. Pultrusion method according to one of Claims 1 to 3, the method comprising applying at least two scrims (15, 215, 315), which are applied to surfaces opposite one another of the preliminary fibre profile (14, 214, 314) to produce the layered structure (20, 220, 320).

5. Pultrusion method according to one of Claims 1 to 4, the method comprising a step of draping the preliminary fibre profile (14, 214, 314) and/or the layered structure (20, 220, 320) before or during the step of producing the overlapping portion (223, 323).

6. Pultrusion method according to one of Claims 1 to 5, the method additionally comprising at least one step of impregnating the fibre rovings (13), the preliminary fibre profile (14, 214, 314), the at least one scrim (15, 215, 315) and/or the layered structure (20, 220, 320) with a matrix.

7. Pultrusion method according to Claim 6, the step of impregnating with a matrix comprising immersing in a matrix immersion bath or injecting a matrix.

8. Pultrusion method according to one of Claims 1 to 7, the at least one scrim (15, 215, 315) in each case comprising a number of layers with an angular orientation differing from one another.

9. Pultrusion device for producing a fibre-reinforced plastic profile, the device being designed for performing a method according to one of Claims 1 to 8, the pultrusion device (10) having a connecting device (18) for connecting the two overlapping lateral edge portions (222a, 222b, 322a, 322b) in the overlapping portion (223, 323), **characterized in that** the connecting device (18) comprises means for form- and/or force-fittingly connecting the edge portions (222a, 222b, 322a, 322b) in the overlapping portion (223, 323) by means of sewing, tufting and/or clamping.

## Revendications

1. Procédé d'extrusion par étirage permettant de fabriquer des profilés en matière plastique renforcés par fibres, comprenant au moins les étapes suivantes consistant à :
- disposer un nombre de stratifils de fibres (13) en une ébauche de fibres unidirectionnelle (14, 214, 314) ayant une première section transversale définie,
- appliquer au moins un non-tissé (15, 215, 315) sur l'ébauche de fibres unidirectionnelle (14, 214, 314) pour produire une structure en couches (20, 220, 320) de préférence une structure en couches multidirectionnelle, chaque non-tissé (15, 215, 315) comprenant des parties de bord latérales (222a, 222b, 322a, 322b),
- disposer en chevauchement deux parties de bord latérales (222a, 222b, 322a, 322b) pour créer une partie de chevauchement commune (223, 323),
**caractérisé en ce que** le procédé comprend en outre une étape consistant à assembler par complémentarité de forme et/ou par adhérence les deux parties de bord latérales qui se chevauchent dans la partie de chevauchement par couture, par tuftage et/ou par agrafage.

2. Procédé d'extrusion par étirage selon la revendication 1, dans lequel la première section transversale définie de l'ébauche de fibres unidirectionnelle (14, 214, 314) comprend une première section transversale rectangulaire pour définir une ébauche de fibres réalisée comme une couche de fibres plane ou une première section transversale fermée ou ouverte dans la direction circonférentielle pour définir une ébauche de fibres réalisée comme un profilé creux ouvert ou fermé.

3. Procédé d'extrusion par étirage selon la revendication 1 ou 2, dans lequel le procédé comprend une application adjacente l'un à l'autre de deux non-tissés (15, 215, 315) sur une surface de l'ébauche de fibres (14, 214, 314), les non-tissés (15, 215, 315) étant disposés en se chevauchant les uns les autres avec une partie de bord (222a, 222b, 322a, 322b) tournée vers le non-tissé (15, 215, 315) respectivement voisin, pour créer la structure en couches (20, 220, 320) et la partie de chevauchement (223, 323).

4. Procédé d'extrusion par étirage selon l'une quelconque des revendications 1 à 3, dans lequel le procédé comprend une application d'au moins deux non-tissés (15, 215, 315) qui sont appliqués à des surfaces opposées l'une à l'autre de l'ébauche de fibres (14, 214, 314) pour créer une structure en couches (20, 220, 320) .

5. Procédé d'extrusion par étirage selon l'une quelconque des revendications 1 à 4, dans lequel le procédé comprend une étape consistant à draper l'ébauche de fibres (14, 214, 314) et/ou la structure en couches (20, 220, 320) avant ou pendant l'étape consistant à créer la partie de chevauchement (223, 323) .

6. Procédé d'extrusion par étirage selon l'une quelconque des revendications 1 à 5, dans lequel le procédé comprend en outre au moins une étape consistant à imprégner les stratifils de fibres (13), l'ébauche de fibres (14, 214, 314), ledit au moins un non-tissé (15, 215, 315) et/ou la structure en couches (20, 220, 320) avec une matrice.

7. Procédé d'extrusion par étirage selon la revendication 6, dans lequel l'étape d'imprégnation avec une matrice comprend une immersion dans un bain d'immersion de matrice ou une injection d'une matrice.

8. Procédé d'extrusion par étirage selon l'une quelconque des revendications 1 à 7, dans lequel ledit au moins un non-tissé (15, 215, 315) comprend respectivement un nombre de couches ayant des orientations angulaires différentes les unes des autres.

9. Dispositif d'extrusion par étirage pour fabriquer un profilé en matière plastique renforcée par fibres, le dispositif permettant d'effectuer un procédé selon l'une quelconque des revendications 1 à 8, le dispositif d'extrusion par étirage (10) présentant un dispositif d'assemblage (18) pour assembler les deux parties de bord latérales (222a, 222b, 322a, 322b) qui se chevauchent dans la partie de chevauchement (223, 323), **caractérisé en ce que** le dispositif d'assemblage (18) comprend des moyens pour assembler par complémentarité de forme et/ou par adhérence les parties de bord (222a, 222b, 322a, 322b) dans la partie de chevauchement (223, 323) par couture, par tuftage et/ou par agrafage.
